# EUROPEAN PATENT APPLICATION

(11) **EP 2 276 245 A1**
(43) Date of publication of application: **19.01.2011**
(21) Application number: 09746509.0
(22) Date of filing: 30.04.2009
(51) Int. Cl.: H04N 5/93, G11B 27/00, G11B 27/10, G11B 27/34, H04N 5/76

(54) **RECORDING/PLAYBACK DEVICE**

(30) Priority: 16.05.2008 JP 2008129179
(71) Applicant: Sharp Kabushiki Kaisha, Osaka-shi, Osaka 545-8522 (JP)
(72) Inventor: ASAO, Kazuhisa, Osaka 545-8522 (JP); KAKAMI, Masayasu, Osaka 545-8522 (JP); YOSHIDA, Masahiro, Osaka 545-8522 (JP); ICHIKAWA, Akio, Osaka 545-8522 (JP); HIRAI, Kenichi, Osaka 545-8522 (JP)
(74) Representative: Müller - Hoffmann & Partner
(86) International application number: PCT/JP2009/058443
(87) International publication number: WO 2009/139302

(57) **Abstract**

A recording/playback device enables the user to grasp at a glance the overview of titles of recorded television programs and immediately select and playback a desired scene without being required to set chapters in advance. When a display device displays a recorded television program, the recording/playback device splits the recorded television program of one title into equal time segments, creates time-sequentially thumbnails positioned approximately at the split points, and arranges them in a list to display them on the screen. I-picture frame data temporally closest to the split points is used to create thumbnails in order to speed up the playback. Time information is displayed together with each thumbnail. When the user selects any thumbnail, the television program is played back starting from that segment. In such a way of displaying, the user can see at a glance what scenes are recorded in the television program without being required to give chapters.

## Description

### TECHNICAL FIELD

The present invention relates to a recording/playback device, and, more particularly, to a recording/playback device having a function of selecting a record title to be played back from a list of recorded record titles.

### BACKGROUND ART

Digital recorders are in widespread use as recording/playback devices. If a user attempts to watch a desired scene from a record title (record title) with a conventional digital recorder, for example, the user performs a search after starting the playback of the record title or displays a chapter list with chapters added in advance to watch the desired scene.
When record titles are displayed as a list, some conventional digital recorders are able to form thumbnails from captured screens of the record titles to display the thumbnails as a list. A user can select an arbitrary thumbnail to play back and watch a record title corresponding to the thumbnail.

For a technique of displaying thumbnails of record titles, for example, Patent Document 1 discloses an image recording and playback device capable of selecting a sufficiently long scene and generating thumbnail images corresponding to the scene. A system controller of the image recording and playback device uniformly divides an entire display time of a title into four and extracts a plurality of long scenes for each divided time. A scene considered to be appropriate for generating a thumbnail image is determined on the basis of the lengths of the scenes and feature points for the thumbnail images detected by a feature point detector from a plurality of the extracted scenes. The system controller selects a thumbnail group for a thumbnail image from the determined scene.

Patent Document 2 discloses a technique designed to facilitate management of titles, etc. , of contents such as video programs recorded in a large-capacity disc storage medium and to enable a change of management information in accordance with editing of content details by a user. In this case, in a certain area of a disc storage medium, pieces of management information are recorded together, such as a title file of contents such as video programs, a reduced screen file (thumbnail index file) indicative of details, and positional information of data of contents. Image data and audio data are recorded in different areas to manage the positional information of the audio data separately from the image data.

### PRIOR ART DOCUMENT

### PATENT DOCUMENT

Patent Document 1: Japanese Laid-Open Patent Publication No. 2001-298711
Patent Document 2: Japanese Laid-Open Patent Publication No. 2000-235780

### SUMMARY OF THE INVENTION

### PROBLEMS TO BE SOLVED BY THE INVENTION

In the case of performing a search after starting the playback of a record title or displaying a chapter list with chapters added in advance as described above when a user attempts to watch a desired scene from one recorded title, it is problematic that the operation is cumbersome and that it takes a time until making ready to watch the desired scene.
In the case of forming thumbnails from captured screens of record titles to display the thumbnails as a list when record titles are displayed as a list, it is problematic that a playback processing for corresponding record titles is necessary for creating thumbnails of record titles and that the playback processing requires time.
In the latter case, speeding-up of the thumbnail display is achieved by saving once created thumbnails in a hard disc and by reading and displaying the thumbnails saved in the hard disc in displaying the thumbnail list on or after second time. However, since a capacity for saving thumbnail data is consumed in the hard disc as a result, a recordable time is problematically reduced.

Even if a sufficiently long scene is selected to generate a thumbnail image as described in Patent Document 1, since a time is uniformly divided and a screen is not entirely utilized for the display, it is problematic that browsability within a record title is not good.
Even if thumbnail data is saved in a hard disc as described in Patent Document 2, it is still problematic that it takes time to create and display thumbnails for the first time.

The present invention was conceived in view of the situations and it is therefore the object of the present invention to provide a recording/playback device that enables a user to comprehend an outline of a recorded title at a glance and to immediately select and play back a desired scene without setting chapters in advance.

### MEANS FOR SOLVING THE PROBLEM

A first technical means of the present invention is a recording/playback device having a recording means that records an input video signal as a record title and a playback means that plays back a record title recorded by the recording means, comprising: a record title list generating means that generates a record title list including recorded record titles arranged as a list; a display output means that outputs the record title list generated by the record title list generating means to a displaying means connected as an external device; and a thumbnail image generating means that generates a plurality of images as thumbnails from a selected record title in conformity to a predetermined number when an operation input is performed to select a certain record title from a display screen of the record title list, wherein the thumbnail image generating means generating images of the generated thumbnails arranged as a list, the display output means outputs the thumbnail images generated by the thumbnail image generating means to the displaying means.

A second technical means of the present invention is the recording/playback device defined in the first technical means, wherein when an operation input is performed to select a certain thumbnail on a display screen displayed by the thumbnail image, the playback means starts playback of the record title from a position corresponding to the selected thumbnail.

A third technical means of the present invention is the recording/playback device defined in the first or second technical means, wherein when generating a plurality of thumbnails from the selected record title, the thumbnail image generating means equally divides a full time length of the selected record title in conformity to the predetermined number to generate the thumbnails based on images at division points, or starting points or ending points of divided parts.

A fourth technical means of the present invention is the recording/playback device defined in the third technical means, wherein the thumbnail image generating means generates the thumbnails based on intra-frame predictive encoded images temporally closest to the images at the division points.

A fifth technical means of the present invention is the recording/playback device defined in the fourth technical means, wherein the intra-frame predictive encoded images are I-pictures of an MPEG encoding method.

A sixth technical means of the present invention is the recording/playback device defined in any one of the first to fifth technical means, wherein when generating the plurality of thumbnail images, each time one thumbnail image is generated, the thumbnail image generating means outputs an image including the generated thumbnail to the display output means.

A seventh technical means of the present invention is the recording/playback device defined in the sixth technical means, wherein the image generated by the thumbnail image generating means is stored in a temporary buffer and is output from the temporary buffer to the display output means.

### EFFECTS OF THE INVENTION

The present invention enables a user to grasp an outline of a recorded title at a glance and to immediately select and play back a desired scene without setting chapters in advance. Since thumbnails created from a title are not saved in a hard disc, it is possible to use a recording capacity effectively without consuming a recording capacity of the hard disc for the thumbnails.

### BRIEF DESCRIPTION OF DRAWINGS

Fig. 1 is a block diagram of an exemplary configuration of a recording/playback device according to one embodiment of the present invention.
Fig. 2 is a diagram of a display example of thumbnails at division points dividing a record title into a plurality of pieces.
Fig. 3 is a diagram of an example of a display screen of a record list when a thumbnail list is displayed.
Fig. 4 is a diagram of another example of a display screen of a record list when a thumbnail list is displayed.
Fig. 5 is a diagram for explaining an example of a processing flow of the recording/playback device according to the present invention.

### EMBODIMENTS OF THE INVENTION

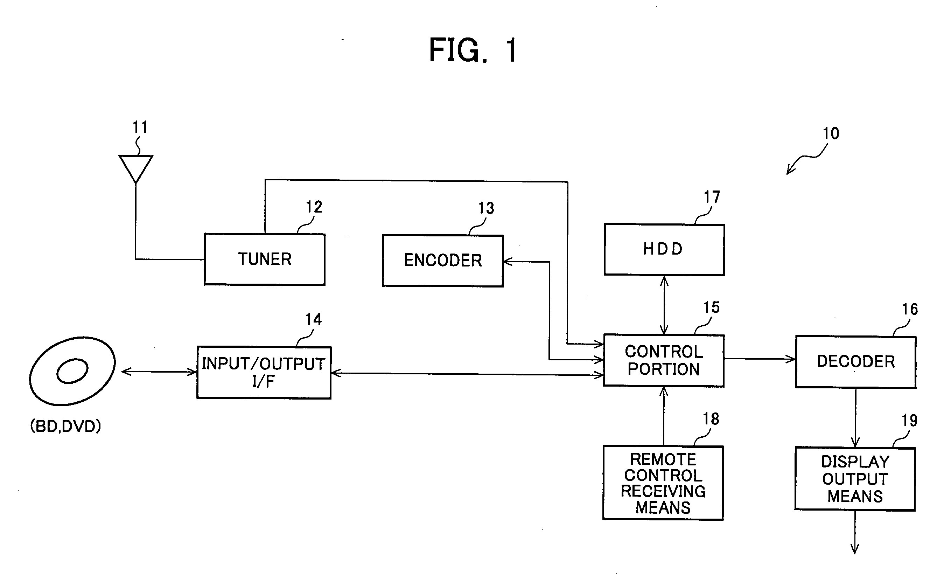

Fig. 1 is a block diagram of an exemplary configuration of a recording/playback device according to one embodiment of the present invention. A recording/playback device 10 includes a tuner 12, an encoder 13, an input/output interface (input/output I/F) 14 that is equipped with an external recording medium (such as BD or DVD) to perform input/output (writing/reading) of data, a control portion 15 made up of CPU, ROM, etc., for controlling processes of a whole apparatus, a decoder 16, an HD (hard disc) 17, a remote control receiving means 18 that includes a light receiving portion that receives an operational signal from an operational input means such as a remote controller, and a display output means 19 that outputs a title received via an antenna 11 or a recorded title to an externally connected displaying device (not shown) (e.g., a displaying means such as a CRT device, a plasma displaying device, a liquid crystal displaying device, and an organic EL/inorganic EL device). The display output means 19 outputs a list of record titles generated under the control of the control portion 15, a list of a plurality of thumbnails generated from a certain record title, etc., to the displaying device.

Although the recording/playback device 10 depicted in Fig. 1 has a configuration capable of receiving both analogue broadcast wave and digital broadcast wave, the recording/playback device 10 may be configured to be capable of receiving only one of the broadcast waves. The recording/playback device 10 may be used for a hard disc recorder, a BD (Blu-Ray) recorder, a DVD recorder, a BD recorder with hard disc or DVD recorder with hard disc which are provided with a built-in digital tuner, respectively, or a hard disc recorder, a BD recorder, a DVD recorder, a BD recorder with hard disc or DVD recorder with hard disc to which a digital tuner is connectable, respectively. If a digital tuner is externally connected, the tuner 12 may be unnecessary.

Although an HD (hard disc) and a BD or DVD portable recording medium are usable as a recording medium, these are not limitations of the recording medium and the recording/playback device 10 is applicable to all the recording mediums capable of recording titles. A record title refers to recorded program data itself.

When the recording/playback device 10 is used for watching digital broadcast, the tuner 12 demodulates a high-frequency signal (digital modulated signal) input from the antenna 11 and inputs the demodulated signal to the decoder 16. The decoder 16 decodes the input demodulated signal into a video signal and an audio signal, then generates a display control output signal from the decoded signals, and outputs the display control output signal to the display output means 19. The display control output signal output from the display output means 19 is input to a displaying device such as a television connected to the recording/playback device 10 and a user can watch a digital broadcast program corresponding to the display control output signal with the display screen thereof.

When the recording/playback device 10 is used for recording an analog broadcast program, the tuner 12 demodulates a high-frequency signal (analog modulated signal) input from the antenna 11 and encodes the demodulated signal with the encoder 13. The encoded data is converted into a format (stream) suitable for recording and is recorded as a record title in various recording mediums such as the HD 17 or BD.
When the recording/playback device 10 is used for recording a digital broadcast program, the tuner 12 demodulates and records a high-frequency signal (digital modulated signal) input from the antenna 11 in various recording mediums such as the HD 17 or BD.

When the recording/playback device 10 plays back a program title recorded in the HD 17 or BD, etc., the decoder 16 decodes data of a record title recorded in the HD 17 or BD, etc., then converts the data into a format for enabling video output, and outputs the converted data to the display output means 19. The display control output signal output from the display output means 19 is input to a displaying device such as a television connected to the recording/playback device 10 and a user can watch a record title corresponding to the display control output signal with the display screen thereof.

In an embodiment according to the present invention, to enable a user to select and play back a desired scene from a recorded record title, one title is divided into a plurality of pieces and thumbnails thereof are displayed as a list on a display screen for displaying a record title list by a displaying device such as a television to enable the user to select an arbitrary thumbnail to play back the title from a scene corresponding to the thumbnail.

The recording/playback device 10 includes a recording means that records an input video signal as a record title and a playback means that plays back a record title recorded by the recording means and has a record title list generating means that generates a record title list formed as a list of recorded record titles, a display output means that outputs the record title list generated by the record title list generating means to a displaying means connected as an external device, and a thumbnail image generating means that generates images of a plurality of thumbnails of one record title arranged as a list. The functions of these means are realized by the control that the control portion 15 gives to the portions of the apparatus by executing programs retained in the recording/playback device 10.

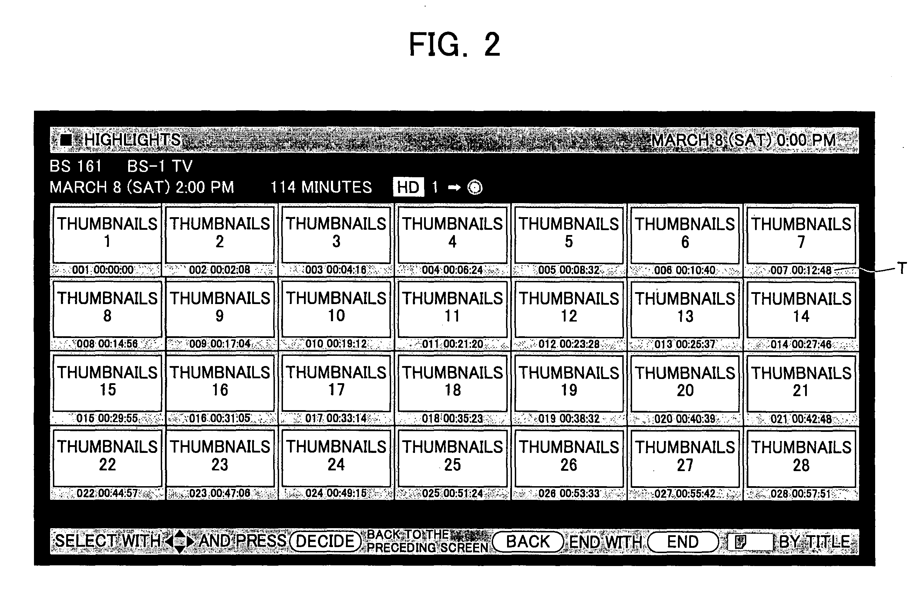

Fig. 2 is a diagram of a display example of thumbnails at division points dividing a record title into a plurality of pieces. A feature of the embodiment according to the present invention is that when displaying a recorded record title on a displaying apparatus such as a television, the recording/playback device 10 divides one record title in a plurality of pieces at regular time intervals and sequentially generates thumbnails at positions substantially corresponding to the division points in order of time to arrange and display the thumbnails in a screen as a list. The processing for dividing a record title into the predetermined number of divisions and generating images of thumbnails arranged as a list is performed when the control portion 15 executes a given program.

Although, for example, division into 28 pieces is selectable for the number of divisions in this case, this is not a limitation and the number of divisions may naturally be set to an arbitrary number. In the case of division into 28 pieces, for example, thumbnails of the starting points of divided parts may be generated to acquire 28 thumbnails, or thumbnails of the ending points of divided parts may be generated to acquire 28 thumbnails likewise, or thumbnails of boundary portions (dividing parts) of divided parts may be selected to acquire 27 thumbnails. In the following description, a point of generating a thumbnail is simply referred to as a division point.

When a plurality of thumbnails is generated from one record title as above, the record title is divided into a plurality of (e.g., 28) pieces at regular time intervals to generate thumbnails based on images at the division points, and frame data of I-pictures temporally closest to the division points are used for images actually used for generating the thumbnails.
When one record title is divided into a plurality of pieces as above to display thumbnails of divided parts as a list, the thumbnails are generated for I-pictures among pieces of picture information encoded in MPEG (Moving Picture Experts Group) to accelerate the thumbnail generation speed. For the I-pictures for generating the thumbnails, the I-pictures temporally closest to the division points are selected as above.

An I-picture, a P-picture, and a B-picture represent frame data of MPEG-Video as is well known. The MPEG encoding method is used for encoding a noninterlaced frame moving image and enables random access to moving images in a stored medium such as a CD-ROM. Therefore, a picture group consisting of one I-picture and pluralities of P-pictures/B-pictures is disposed as a unit in encoded data to enable playback for every picture group.

An I-picture is an image defined as the origin of playback of a moving image and is encoded in a still image mode by the intra-frame predictive encoding. A P-picture is encoded by the motion-compensating inter-frame prediction from a temporally preceding I-picture or P-picture. A plurality of B-pictures exist between an I-picture and a P-picture or between a P-picture and a P-picture, and a B-picture is encoded by the motion-compensating inter-frame prediction utilizing temporally preceding (forward directional), subsequent (backward directional), or preceding and subsequent (bidirectional) pictures. The mode to be used is selectable from the forward directional, backward directional, and bidirectional modes for each macro block and the mode with the smallest prediction difference is selected.

In the embodiment, when one title is divided into a plurality of pieces along the time direction to display thumbnails of divided portions as a list, data of the I-pictures closest to the division points are played back to generate thumbnails to sequentially display the generated thumbnails as a list in the order of generation. Although picture data of a record title must be played back to generate a thumbnail, data of an I-picture itself enables the generating of one image as above, while playback of a P-picture and a B-picture requires playback of an I-picture and takes more time than playing back only an I-picture. By always using the I-pictures in generating thumbnails, the playback time may be reduced to increase the thumbnail generation speed.

Since GOP (group of pictures) including one I-picture is made up of 15 pictures, an I-picture appears at least within 0. 5 seconds in the case of a video having 30 frames per one second. Therefore, thumbnails can be generated at positions substantially identical to the division points dividing one record title into a plurality of pieces.

Displaying thumbnails as a list, as described above, enables a user to recognize what scene is recorded at what part of one record title at a glance. A technique of the embodiment according to the present invention is unlike displaying chapters as a list and needs no chapter mark added to a record title in advance.

When the thumbnails of a record title are displayed as a list as depicted in Fig. 2, time information T of the thumbnails is displayed for each thumbnail. For example, the start time of the record title can be defined as "0 (00 hour 00 minute 00 second)" to display information of elapsed time from the start time for each thumbnail. When generating a plurality of thumbnails from one record title, the control portion 15 calculates or acquires the elapsed time from the start time in accordance with the number of divisions to display the elapsed time along with the thumbnails. The time information displayed with the thumbnails may use real-time information when recording is performed, instead of the elapsed time from the start time of the record title as described above. By displaying the time information T of the thumbnails in the record title, usability can be improved.

When a user moves a focus (cursor) to select a desired thumbnail on the screen with the thumbnails displayed as a list, the title can be played back from a scene corresponding to the selected thumbnail. The operation of moving the focus to the desired thumbnail can be performed, for example, by pressing direction keys of a remote controller disposed for operating the recording/playback device 10, and the operation of selecting the thumbnail at the moved focus to start playback can be performed by executing an operation of pressing a decision button or a playback button disposed on the remote controller.

In the embodiment according to the present invention, the data of the thumbnails generated by dividing the record title is once retained in a buffer and displayed by the display output means 19 without being stored in HD and, if the screen of the thumbnail list is erased, the generated data is discarded. If the instruction is given again for generating thumbnails of the same tittle, the same processing is repeated again to generate a list of thumbnails in each case. This eliminates the need for storing the thumbnails in the HD, and it is possible to avoid consuming a recording area of the HD with the thumbnails.

When thumbnails of a title are created by the above processing, the processing is executed for generating and sequentially displaying the thumbnails by playing back the I-pictures closest to the division positions. The processing for generating/displaying thumbnails within the title is sequentially executed and the thumbnails are displayed on the screen in ascending order of time.
For example, even if the thumbnail display of this embodiment is inferior in speed to the conventional processing for saving the once generated thumbnails in HD and displaying the thumbnails by reading them from the HD, this embodiment is able to achieve effect of allowing a user to recognize what scene is recorded at what time point by purposefully presenting the process of generating the thumbnails to the user.

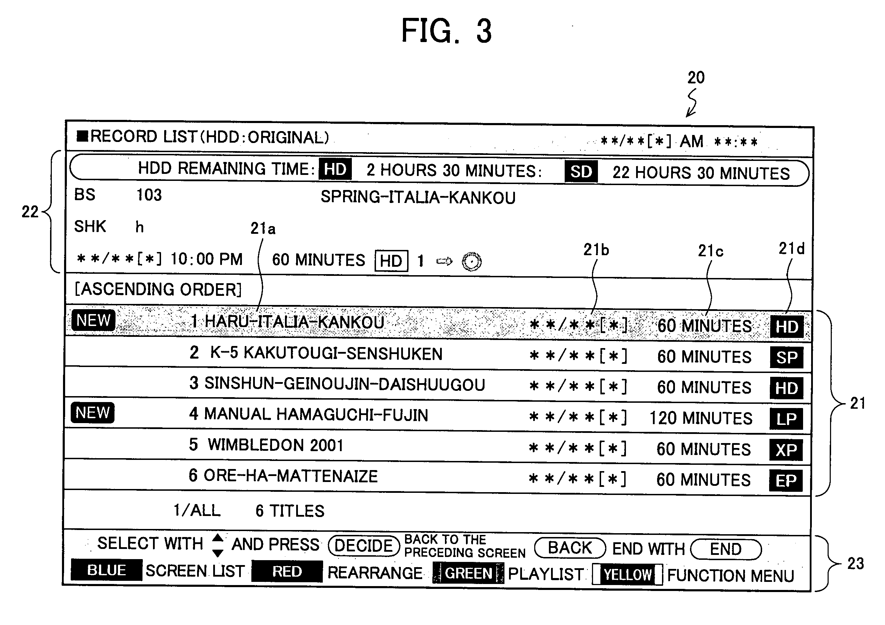

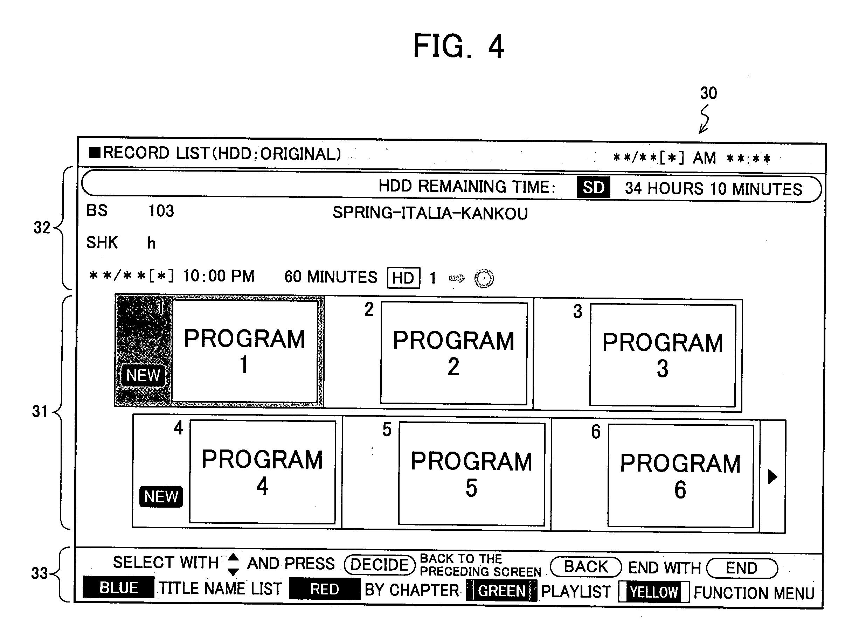

Figs. 3 and 4 are diagrams of examples of a display screen of a record list when the thumbnail list depicted in Fig. 2 is displayed.
When displaying a list of titles recorded in the recording/playback device 10, a user can display the record list of the recording/playback device 10 by pressing a record list button disposed on the remote controller for operating the recording/playback device 10, for example. Naturally, such a button for special purpose only is not a limitation and the display of the record list may be performed by a certain menu operation or a certain key operation.

A record list screen 20 using a title name list as depicted in Fig. 3 can be displayed as a screen example of a record list. In this case, a title name list 21 of record titles currently recorded in the HD of the recording/playback device 10 is displayed. A title name 21a, information of date and day of the week 21b, record time information 21c, and image quality information 21d are indicated for each title in the title name list 21. Detailed information 22 is displayed for a record title where a cursor is positioned. The detailed information 22 is changed in accordance with the movement of the cursor. The record titles are sortable in conformity to conditions such as in the order of the newest (or oldest) title, in the order of title names, by watched/unwatched programs, and in the order of data amounts. The record list screen 20 also displays descriptions 23 of buttons disposed on the remote controller.

A record list screen 30 using an index screen (thumbnails) as depicted in Fig. 4 can be displayed as another screen example of a record list. On the record list screen 30, the index screen (thumbnail screen) is generated by capturing the first screens of the record titles to display an index screen list 31 for the titles. This facilitates a grasp of contents of the record titles. The index screen in this case is generated for each record title and retained in the HD.

Detailed information 32 is displayed for a record title where the cursor is positioned. The detailed information 32 is changed in accordance with the movement of the cursor. The record titles are sortable in conformity to conditions such as in the order of the newest (or oldest) title, in the order of title names, by watched/unwatched programs, and in the order of data amounts. The record list screen 30 also displays descriptions 33 of buttons disposed on the remote controller.

The record list screens 20 and 30 of Figs. 3 and 4 may be switched and displayed in accordance with a certain operation of the remoter controller, etc., or one of the record list screens 20, 30 may always be displayed.

When a user moves the cursor to select a certain title from one of the record list screens 20 and 30, the thumbnail display is performed for the selected title as depicted in Fig. 2. The selection of a title from the record list 20 or 30 can be performed by operating a certain key disposed on the remote controller, for example.
While the cursor is located on a certain title, the playback of the selected title can be started instead of the thumbnail display depicted in Fig. 2 by, for example, operating the decision key rather than operating a certain key as described above.

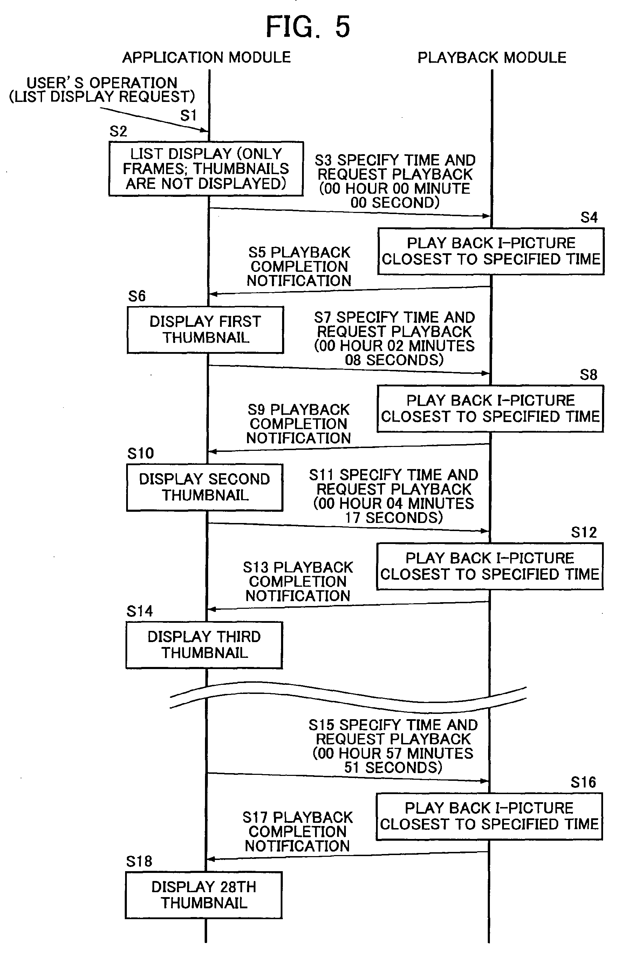

Fig. 5 is a diagram for explaining an example of a process flow of the recording/playback device according to the present invention. Processes of an application module and a playback module in the recording/playback device are depicted. The application module and the playback module are software modules that execute processes related to this embodiment in the recording/playback device 10. In terms of hardware, the processes are executed under the control of the control portion 15 depicted in Fig. 1. The following example describes a process example when the thumbnail display is performed for a title with a length of one hour.

First, a user operates the operational input means such as a remote controller of the recording/playback device to make a request for displaying a thumbnail list of a certain record title (step S1). The request for displaying a thumbnail list of a record title is made by selecting an arbitrary title through a user's operation from the record list screen 20, 30 depicted in Fig. 3 or 4, for example, and giving an instruction for the thumbnail list display of the title through a certain operation.

The application module starts to display the thumbnail of the selected record title as a list(step S2). Only frames for displaying thumbnails are first displayed at this point and the thumbnail display is not displayed. A display screen for displaying the thumbnails is output from the display output means 19 of the recording/playback device and displayed on a displaying device such as a television. The same applies to the time of the following thumbnail generation.
The application module specifies a time and makes a playback request to the playback module (step S3). Since the request is made for a first thumbnail at this point, the application module specifies "00 hour 00 minute 00 second" to make the playback request to the playback module.

The playback module accordingly plays back the I-picture closest to the specified time ("00 hour 00 minute 00 second" in this case) specified by the application module (step S4). When the playback is completed, the playback module sends a playback completion notification to the application module (step S5). The application module uses the played back I-picture to display the first thumbnail (step S6). The first thumbnail is displayed in a frame displayed at step S2.

The application module then specifies a time for displaying a second thumbnail and sends a playback request to the playback module (step S7). Since the full length of the record title is one hour and 28 thumbnails are set to be displayed in this case, the second time information specified by the application module is "00 hour 02 minutes 08 seconds".
The playback module accordingly plays back the I-picture closest to the specified time specified by the application module (step S8). When the playback is completed, the playback module sends a playback completion notification to the application module (step S9). The application module uses the played back I-picture to display the second thumbnail (step S10). The second thumbnail is displayed in a frame adjacently to the first thumbnail displayed at step S6.

The application module specifies a time for displaying a third thumbnail and sends a playback request to the playback module as described above (step S11). The third time information specified by the application module is "00 hour 04 minutes 17 seconds". The playback module plays back the I-picture closest to the specified time specified by the application module (step S12). When the playback is completed, the playback module sends a playback completion notification to the application module (step S13). The application module uses the played back I-picture to display the third thumbnail (step S14). The third thumbnail is displayed in a frame adjacently to the second thumbnail displayed at step S10.

The process same as described above is repeated and, in response to a playback request specifying a time of a 28th thumbnail ("00 hour 57 minutes 51 seconds") from the application module (step S15), the playback module plays back the I-picture closest to the specified time (step S16) and gives a playback completion notification (step S17), causing the application module to display the 28th thumbnail (step S18). As a result, the thumbnail list display of the certain title as depicted in Fig. 2 is completed.

If a selecting operation is subsequently performed for a certain thumbnail, the playback module executes processing for playing back the title from the picture data corresponding to the selected thumbnail.

### EXPLANATIONS OF REFERENCE NUMERALS

10...recording/playback device; 11...antenna; 12...tuner; 13...encoder; 14...input/output I/F; 15...control portion; 16...decoder; 17...HD; 18...remote control receiving means; 19...display output means; 20...record list screen; 21...title name list; 21a...title name; 21b...information of day of the week; 21c...record time information; 21d...image quality information; 22...detailed information; 23...description of buttons; 30...record list screen; 31...index screen list; 32...detailed information; and 33...description of buttons.

## Claims

1. A recording/playback device having a recording means that records an input video signal as a record title and a playback means that plays back a record title recorded by the recording means, comprising:
a record title list generating means that generates a record title list including recorded record titles arranged as a list;
a display output means that outputs the record title list generated by the record title list generating means to a displaying means connected as an external device; and
a thumbnail image generating means that generates a plurality of images as thumbnails from a selected record title in conformity to a predetermined number when an operation input is performed to select a certain record title from a display screen of the record title list, the thumbnail image generating means generating images of the generated thumbnails arranged as a list, wherein
the display output means outputs the thumbnail images generated by the thumbnail image generating means to the displaying means.

2. The recording/playback device defined in claim 1, wherein when an operation input is performed to select a certain thumbnail on a display screen displayed by the thumbnail image, the playback means starts playback of the record title from a position corresponding to the selected thumbnail.

3. The recording/playback device defined in claim 1 or 2, wherein when generating a plurality of thumbnails from the selected record title, the thumbnail image generating means equally divides a full time length of the selected record title in conformity to the predetermined number to generate the thumbnails based on images at division points, or starting points or ending points of divided parts.

4. The recording/playback device defined in claim 3, wherein the thumbnail image generating means generates the thumbnails based on intra-frame predictive encoded images temporally closest to the images at the division points.

5. The recording/playback device defined in claim 4, wherein the intra-frame predictive encoded images are I-pictures of an MPEG encoding method.

6. The recording/playback device defined in any one of claims 1 to 5, wherein when generating the plurality of thumbnail images, each time one thumbnail image is generated, the thumbnail image generating means outputs an image including the generated thumbnail to the display output means.

7. The recording/playback device defined in claim 6, wherein the image generated by the thumbnail image generating means is stored in a temporary buffer and is output from the temporary buffer to the display output means.
